# EUROPEAN PATENT APPLICATION

(11) **EP 4 832 589 A1**
(43) Date of publication of application: **28.10.2026**
(21) Application number: 23961847.3
(22) Date of filing: 20.12.2023
(51) Int. Cl.: H04W 52/02

(54) **WAKE-UP SIGNAL DETECTION METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN)
(74) Representative: Mewburn Ellis LLP
(86) International application number: PCT/CN2023/140358
(87) International publication number: WO 2025/129508

(57) **Abstract**

This disclosure discloses a method and apparatus for wake-up signal (WUS) detection, a device, a medium, and a program product, and belongs to the field of communication technology. The method is performed by a terminal device and includes the following. At least one of a first WUS or a second WUS is detected. Detection energy consumption for the first WUS is lower than detection energy consumption for the second WUS. According to the method, by using the first WUS with the lower detection energy consumption, the power consumption of the terminal device can be reduced. Since the first WUS and the second WUS have different coverages, different detection schemes may be used in different communication scenarios, thereby satisfying requirements of various communication scenarios with different coverage requirements.

## Description

### TECHNICAL FIELD

This disclosure relates to the field of communication technology, and in particular, to a method and apparatus for wake-up signal (WUS) detection, a device, a medium, and a program product.

### BACKGROUND

When there is no data for transmission, a terminal device supporting a discontinuous reception (DRX) mechanism stops blind detection of a physical downlink control channel (PDCCH), thereby reducing the power consumption of the terminal device.

In the related art, by using a wake-up signal (WUS) mechanism, the terminal device enters active time in the DRX mechanism upon receiving a WUS, thereby achieving power saving. However, the power consumption for detecting the WUS is still high, which contradicts the idea of reducing the power consumption of the terminal device.

### SUMMARY

A method and apparatus for wake-up signal (WUS) detection, a device, a medium, and a program product are provided in the disclosure. The technical solution at least includes the following.

According to an aspect of embodiments of the disclosure, a method for WUS detection is provided. The method is performed by a terminal device and includes the following. At least one of a first WUS or a second WUS is detected. Detection energy consumption for the first WUS is lower than detection energy consumption for the second WUS.

According to another aspect of embodiments of the disclosure, a method for WUS transmission is provided. The method is performed by a network device and includes the following. At least one of a first WUS or a second WUS is transmitted. Detection energy consumption for the first WUS is lower than detection energy consumption for the second WUS.

According to another aspect of embodiments of the disclosure, an apparatus for WUS detection is provided. The apparatus includes a detecting module. The detecting module is configured to detect at least one of a first WUS or a second WUS. Detection energy consumption for the first WUS is lower than detection energy consumption for the second WUS.

According to another aspect of embodiments of the disclosure, an apparatus for WUS transmission is provided. The apparatus includes a transmitting module. The transmitting module is configured to transmit at least one of a first WUS or a second WUS. Detection energy consumption for the first WUS is lower than detection energy consumption for the second WUS.

According to another aspect of embodiments of the disclosure, a terminal device is provided. The terminal device includes: a processor; a transceiver coupled with the processor; and a memory configured to store executable instructions of the processor. The processor is configured to load and execute the executable instructions to implement the method for WUS detection in the above aspects.

According to another aspect of embodiments of the disclosure, a network device is provided. The network device includes: a processor; a transceiver coupled with the processor; and a memory configured to store executable instructions of the processor. The processor is configured to load and execute the executable instructions to implement the method for WUS transmission in the above aspects.

According to another aspect of embodiments of the disclosure, a computer-readable storage medium is provided. The computer-readable storage medium stores at least one program which is configured to be loaded and executed by a processor to implement the method for WUS detection or the method for WUS transmission in the above aspects.

According to another aspect of embodiments of the disclosure, a chip is provided. The chip includes programmable logic circuits and/or program instructions. The chip is configured to, when running on a terminal device or a network device, implement the method for WUS detection or the method for WUS transmission in the above aspects.

According to another aspect of embodiments of the disclosure, a computer program product or a computer program is provided. The computer program product or the computer program includes computer instructions which are stored in a computer-readable storage medium. A processor obtains the computer instructions from the computer-readable storage medium and executes the computer instructions to implement the method for WUS detection or the method for WUS transmission in the above aspects.

The technical solution provided in embodiments of the disclosure has the following beneficial effects.

At least one of a first WUS or a second WUS is detected, where detection energy consumption for the first WUS is lower than detection energy consumption for the second WUS. By using the first WUS with the lower detection energy consumption, the power consumption of a terminal device can be reduced. Since the first WUS and the second WUS have different coverages, different detection schemes may be used in different communication scenarios, thereby satisfying requirements of various communication scenarios with different coverage requirements.

### BRIEF DESCRIPTION OF THE DRAWINGS

In order to describe more clearly technical solutions of embodiments of the disclosure, the following will give a brief introduction to the accompanying drawings used for describing the embodiments. Apparently, the accompanying drawings described below are merely some embodiments of the disclosure. Based on these drawings, those of ordinary skill in the art can also obtain other drawings without creative effort.
FIG. 1 is a schematic diagram of a discontinuous reception (DRX) transmission mechanism provided in the related art.
FIG. 2 is a schematic diagram of a receiver system provided in the related art.
FIG. 3 is a schematic diagram of a communication system provided in an exemplary embodiment of the disclosure.
FIG. 4 is a flowchart of a method for wake-up signal (WUS) detection provided in an exemplary embodiment of the disclosure.
FIG. 5 is a schematic diagram illustrating amplitude modulation provided in an exemplary embodiment of the disclosure.
FIG. 6 is a schematic diagram illustrating generation of a first WUS provided in an exemplary embodiment of the disclosure.
FIG. 7 is a schematic diagram illustrating a first period and a second period provided in an exemplary embodiment of the disclosure.
FIG. 8 is a schematic diagram illustrating a first period and a second period provided in an exemplary embodiment of the disclosure.
FIG. 9 is a flowchart of a method for WUS transmission provided in an exemplary embodiment of the disclosure.
FIG. 10 is a schematic diagram of a communication scenario provided in an exemplary embodiment of the disclosure.
FIG. 11 is a block diagram of an apparatus for WUS detection provided in an exemplary embodiment of the disclosure.
FIG. 12 is a block diagram of an apparatus for WUS transmission provided in an exemplary embodiment of the disclosure.
FIG. 13 is a schematic structural diagram of a terminal device or a network device provided in an exemplary embodiment of the disclosure.

### DETAILED DESCRIPTION

In order to make the objectives, technical solutions, and advantages of the disclosure clearer, embodiments of the disclosure will be further described in detail below with reference to the accompanying drawings. Exemplary embodiments will be described in detail herein, and examples of these embodiments are illustrated in the accompanying drawings. When the following descriptions relate to the accompanying drawings, unless otherwise stated, the same numerals in different accompanying drawings refer to the same or similar elements. The embodiments described in the following exemplary embodiments are not intended to represent all embodiments consistent with the embodiments of the disclosure. Instead, they are merely examples of apparatuses and methods consistent with some aspects of the disclosure as elaborated in the appended claims.

The terms used in the disclosure are merely intended for describing the particular embodiments, rather than limiting the disclosure. The singular form "a/an", "said", "above", and "the" used in the disclosure and the appended claims are also intended to include plural forms, unless otherwise specified in the context. It may also be understood that, the term "and/or" used herein refers to any or all of possible combinations of one or more associated items that are listed.

It may be understood that, although the terms "first", "second", "third", and the like may be used in the disclosure to describe various information, such information will not be limited to these terms. These terms are merely used for distinguishing the same type of information from each other. For example, without departing from the scope of the disclosure, first information may also be referred to as second information, and similarly, the second information may also be referred to as the first information, depending on the context. For example, the word "if" used herein may be interpreted as "at...", or "when...", or "in response to a determination".

The technical solutions described in some embodiments of the disclosure may be applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5th-generation (5G) system, a cellular internet of things (IoT) system, and a cellular passive IoT system, or may be applicable to a subsequent evolved system of a 5G NR system, or may be applicable to 6th-generation (6G) and subsequent evolved systems.

It may be understood that in some embodiments of the disclosure, "5G" may also be referred to as "5G NR" or "NR".

It may be understood that in the elaborations of embodiments of the disclosure, the term "correspondence" may mean that there is a direct or indirect correspondence between the two, may mean that there is an association between the two, or may mean a relationship of indicating and being indicated or configuring and being configured, etc.

In embodiments of the disclosure, the "pre-defined" can be implemented by presaving a corresponding code or table in a device (for example, including a terminal device and a network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

Next, discontinuous reception (DRX) will be introduced.

For the consideration of power saving at terminal devices, related communication systems support a DRX mechanism. The main principle thereof is to realize discontinuous reception of signals in time domain through a semi-static configuration. When there is no data for transmission, the power consumption can be reduced by means of stopping receiving a physical downlink control channel (PDCCH).

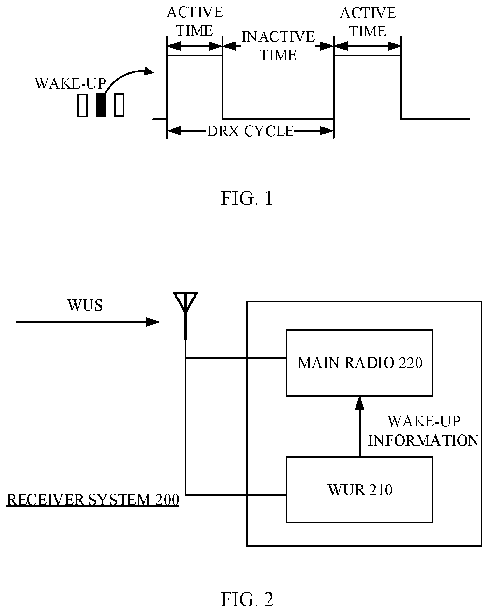

The DRX is configured as follows. A terminal device in a radio resource control (RRC) connected state (RRC_CONNECTED) is configured with a DRX cycle. FIG. 1 is a schematic diagram of a DRX transmission mechanism provided in the related art. A DRX cycle includes active time and inactive time. In the "active time", the terminal device monitors and receives a PDCCH. In the "inactive time", the terminal device does not receive the PDCCH to reduce the power consumption.

Next, a wake-up signal (WUS) will be introduced.

In the related art, a DRX mechanism may be used in combination with a WUS. The terminal device receives an indication of the WUS before a DRX ON duration. As illustrated in FIG. 1, when the terminal device has data for transmission in one DRX cycle, the terminal device is woken up by a WUS to detect a PDCCH during the DRX ON duration. When the terminal device has no data for transmission in one DRX cycle, the WUS does not wake up the terminal device, and the terminal device does not need to detect the PDCCH during the DRX ON duration. Compared with the related DRX mechanism, when the terminal device has no data for transmission, the terminal device may omit detection of the PDCCH during the DRX ON duration, thereby achieving energy saving. The time before the DRX ON duration of the terminal device may be referred to as the inactive time, and the DRX ON duration of the terminal device may be referred to as the active time. A DRX WUS adopts a waveform and structure similar to those of the PDCCH.

Next, a receiver system will be introduced.

FIG. 2 is a schematic diagram of a receiver system 200 provided in the related art. The receiver system 200 includes a wake-up receiver (WUR) 210 and a main radio 220.

In some embodiments, the main radio 220 may be equivalently understood as a main transceiver or a main air-interface communication unit.

For further power saving, a WUR is introduced to receive a WUS. The WUR has characteristics of extremely low cost, extremely low complexity, and extremely low power consumption, and mainly receives the WUS in an envelope detection-based manner. In other manners, it is not excluded to use a similar traditional receiver manner. In short, a power consumption level of the WUR is several orders of magnitude lower than a power consumption level of a traditional dormancy mode. Generally, the power consumption of a traditional receiver is greater than 100 milliwatts, while the power consumption of a low-power-consumption receiver may be less than 1 milliwatt.

Therefore, the WUS received by the WUR is different from a signal defined in the related standard and carried based on the PDCCH in terms of a modulation scheme and a waveform, etc. The WUS may be an envelope signal obtained by performing amplitude shift keying (ASK) modulation on a carrier signal. The demodulation for the envelope signal may also be completed by driving a low-power-consumption circuit based on energy provided by a wireless radio frequency signal, so it may be passive. The WUS may also be actively powered by the terminal device. Regardless of the power supply manner, the power consumption of the receiver is significantly reduced compared with the power consumption of the traditional receiver. For example, the WUR may achieve power consumption of less than 1 milliwatt, which is far lower than the power consumption of the main radio, i.e., dozens to hundreds of milliwatts. The WUR may be combined with the terminal device as an additional module of a receiver of the terminal device, or may be separately used as a wake-up function module of the terminal device.

As illustrated in FIG. 1, in an initial state, the WUR 210 is in a wake-up state, and the main radio 220 is in an off state. The WUR 210 receives a WUS and determines, according to an indication of the WUS, whether to wake up the main radio 220. If the main radio 220 needs to be woken up, a network device may transmit a WUS to the WUR 210, and the WUR 210 wakes up the main radio 220 after receiving the WUS. Otherwise, the main radio 220 remains in the off state.

In some embodiments, when the WUS is transmitted, it indicates wake-up. When the WUS is not transmitted, it indicates non-wake-up.

In some embodiments, when a WUS carrying a wake-up indication is transmitted, it indicates wake-up. When a WUS carrying a non-wake-up indication is transmitted, it indicates non-wake-up.

The WUR may be activated by the WUS and receive the WUS at any time. For example, the WUS is modulated by on-off keying (OOK). The principle of OOK modulation is to modulate an amplitude of the carrier signal to be a non-zero value (1) and a zero value (0), which respectively correspond to "on" and "off" and represent information bits. The OOK is also known as binary amplitude shift keying (2-ASK). For example, bit 1 is modulated to "on", and bit 0 is modulated to "off".

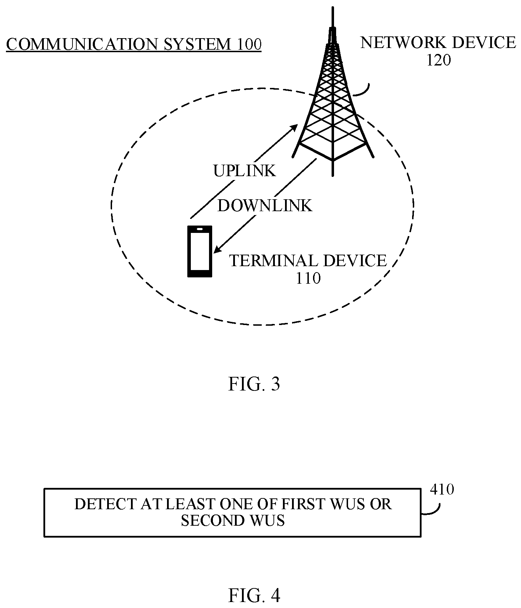

FIG. 3 is a schematic diagram of a communication system 100 provided in an exemplary embodiment of the disclosure. The communication system 100 includes a terminal device 110 and a network device 120.

The terminal device 110 in the disclosure may also be referred to as a user equipment (UE), an access terminal, a subscriber unit, a subscriber station, a mobile station, a remote station, a remote terminal, a mobile device, a user terminal, a terminal, a wireless communication device, a user agent, or a user device. The terminal includes, but is not limited to: a handheld device, a wearable device, an in-vehicle device, and an IoT device, such as a mobile phone, a tablet computer, an e-book reader, a laptop computer, a desktop computer, a television, a gaming console, a mobile internet device (MID), an augmented reality (AR) terminal, a virtual reality (VR) terminal, a mixed reality (MR) terminal, a wearable device, a joystick, an electronic tag, a controller, a wireless terminal in industrial control, a wireless terminal in self-driving, a wireless terminal in remote medicine, a wireless terminal in a smart grid, a wireless terminal in transportation safety, a wireless terminal in a smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set top box (STB), and a customer premise equipment (CPE).

The network device 120 in the disclosure provides wireless communication functions. The network device 120 includes, but is not limited to: an evolved Node B (eNB), a radio network controller (RNC), a Node B (NB), a base station controller (BSC), a base transceiver station (BTS), a home base station (e.g., Home eNB or Home NB, HNB), a baseband unit (BBU), an access point (AP) in a Wi-Fi system, a wireless relay node, a wireless backhaul node, a transmission point (TP), or a transmission and reception point (TRP). The network device 120 may also be a next generation Node B (gNB) or a transmission point (TRP or TP) in a 5G mobile communication system, or may be an antenna panel or a group of antenna panels (including multiple antenna panels) of a base station in the 5G system, or may be a network node constituting a gNB or TP, such as a BBU or a distributed unit (DU), or a base station in a beyond 5G (B5G) mobile communication system or a 6G mobile communication system, etc., or a core network (CN), fronthaul, backhaul, a radio access network (RAN), a network slice, etc., or a serving cell, a primary cell (PCell), a primary secondary cell (PSCell), a special cell (SpCell), a secondary cell (SCell), a neighbouring cell, or the like of the terminal device.

The terminal device 110 communicates with the network device 120 through a certain air-interface technology, such as an Uu interface.

Exemplarily, there are two communication scenarios between the terminal device 110 and the network device 120: an uplink communication scenario and a downlink communication scenario. Uplink communication refers to transmission of a signal by the terminal device 110 to the network device 120, while downlink communication refers to transmission of a signal by the network device 120 to the terminal device 110.

The technical solutions provided in embodiments of the disclosure may be applied to various communication systems, such as a GSM, a CDMA system, a WCDMA system, a GPRS, an LTE system, an LTE-A system, an LTE frequency division duplex (FDD) system, an LTE time division duplex (TDD) system, a UMTS, a worldwide interoperability for microwave access (WiMAX) communication system, a 5G mobile communication system, an NR system, an evolved system of an NR system, an LTE-U system, an NR-U system, an NTN system, a non-NTN system, a WLAN, Wi-Fi, a cellular IoT system, and a cellular passive IoT system, or may be applicable to a subsequent evolved system of a 5G NR system, or may be applicable to B5G, 6G, and subsequent evolved systems.

In some embodiments of the disclosure, "NR" may also be referred to as the 5G NR system or 5G system. The 5G mobile communication system may include non-standalone (NSA) and/or standalone (SA) networking.

The technical solutions provided in the embodiments of the disclosure may also be applied to machine type communication (MTC), a long term evolution-machine (LTE-M) technology, a device to device (D2D) network, a machine to machine (M2M) network, an IoT network, or other networks. For example, the IoT network may include internet of vehicles (IoV). Communication modes in the IoV system are collectively referred to as vehicle to X (V2X, where X may represent anything). For example, the V2X may include: vehicle to vehicle (V2V) communication, vehicle to infrastructure (V2I) communication, vehicle to pedestrian (V2P) communication, vehicle to network (V2N) communication, or the like.

When there is no data for transmission, a terminal device supporting a DRX mechanism stops blind detection of a PDCCH, thereby reducing the power consumption of the terminal device. In the related art, by using a WUS mechanism, the terminal device enters active time in the DRX mechanism upon receiving a WUS, thereby achieving power saving. However, the power consumption for detecting the WUS is still high, which contradicts the idea of reducing the power consumption of the terminal device. To this end, a method for detecting at least one of two types of WUSs is provided in embodiments of the disclosure.

FIG. 4 is a flowchart of a method for WUS detection provided in an exemplary embodiment of the disclosure. The method is performed by a terminal device and includes the following.

At 410, at least one of a first WUS or a second WUS is detected.

In some embodiments, detection energy consumption for the first WUS is lower than detection energy consumption for the second WUS.

In some embodiments, the first WUS and the second WUS have at least one of the following differences: different waveforms, different configuration periods, different time-domain locations, or different corresponding receivers.

In some embodiments, whether the first WUS and the second WUS are received indicates whether to initiate DRX detection and paging detection. If the first WUS or the second WUS is received, it indicates to initiate the DRX detection and the paging detection. If none of the first WUS and the second WUS is received, it indicates not to initiate the DRX detection and the paging detection.

In some embodiments, the first WUS carries first wake-up indication information, and the second WUS carries second wake-up indication information. The first wake-up indication information and the second wake-up indication information indicate whether to initiate DRX detection and paging detection as well as initiation time.

In some embodiments, the first WUS is a signal having a first waveform, and the second WUS is a signal having a second waveform. The first waveform is obtained based on a single-carrier modulation scheme, and the second waveform is obtained based on a multi-carrier modulation scheme. The first waveform and the second waveform are both simple waveforms. Modulation schemes used include amplitude modulation, frequency modulation, phase modulation, and the like. The single-carrier modulation is a modulation technology in which only one carrier is used in a fixed frequency band, and the multi-carrier modulation is a modulation technology in which multiple carriers are used in a fixed frequency band.

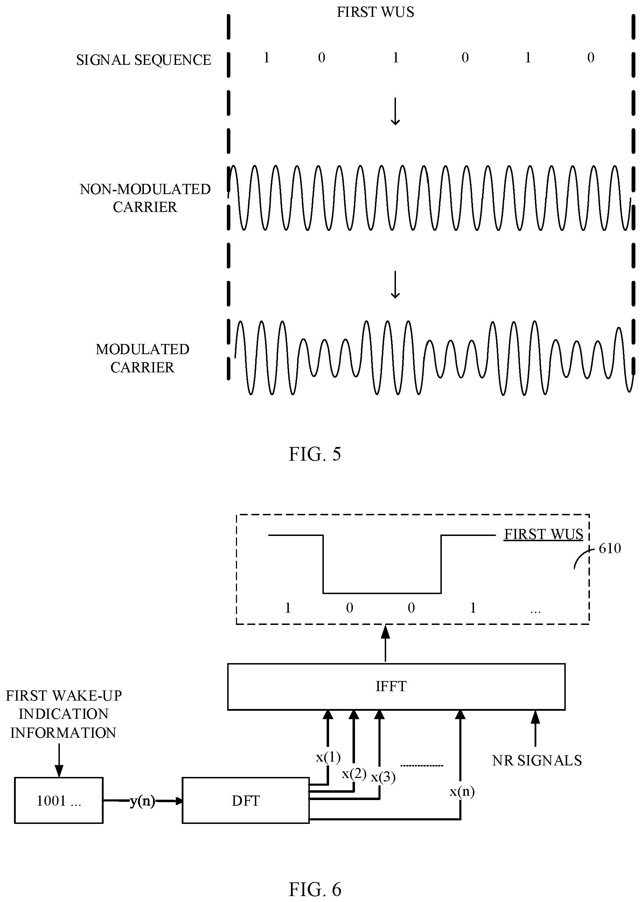

FIG. 5 is a schematic diagram illustrating amplitude modulation provided in an exemplary embodiment of the disclosure. Exemplarily, a signal sequence corresponding to the first WUS is 101010. A non-modulated carrier is modulated based on the signal sequence, to obtain a waveform of a modulated carrier illustrated in FIG. 5.

In some embodiments, the first waveform includes at least one of an OOK waveform, a binary phase shift keying (BSK) waveform, an ASK waveform, or a frequency shift keying (FSK) waveform. The second waveform includes an orthogonal frequency division multiplexing (OFDM) waveform.

In the related art, by using the second WUS, the terminal device enters active time in a DRX mechanism upon receiving the second WUS, thereby achieving power saving. The second WUS has a PDCCH waveform, and may be referred to as an ordinary WUS. The second WUS has relatively high detection energy consumption, which leads to an increase in operating energy consumption of the terminal device. In embodiments of the disclosure, by using the first WUS with the lower detection energy consumption, further power saving can be achieved. By using the second WUS, a larger communication area can be covered. The detection of at least one of two types of WUSs based on specific scenarios may adapt to different channel environments, thereby achieving flexibility and energy saving.

FIG. 6 is a schematic diagram illustrating generation of a first WUS provided in an exemplary embodiment of the disclosure. In some embodiments, first wake-up indication information is carried in the first WUS. The first wake-up indication information is converted into a signal sequence with a length of *K*, where *K* is a positive integer greater than 1. The conversion manner includes at least one of upsampling, spreading, or sequence mapping. Optionally, for converting the first wake-up indication information in a sequence mapping manner, the sequence includes at least one of a constant amplitude zero auto correlation (CAZAC) sequence, a pseudo-noise (PN) sequence, a Gold sequence, an M sequence, or a Hadamard sequence.

The converted signal sequence is subject to discrete Fourier transform (DFT) to form multiple subcarrier signals. For example, DFT is performed on the converted signal sequence y(*n*) to obtain x(1), x(2), and so on until x(*n*). The multiple subcarrier signals are subject to invert fast Fourier transformation (IFFT) to generate the first WUS. A waveform of the first WUS in time domain is represented by a first waveform 610. Optionally, the multiple subcarrier signals may also be multiplexed with other NR signals before IFFT. Optionally, instead of DFT and IFFT, single-carrier amplitude modulation is directly performed on the converted signal sequence to obtain the first WUS.

Optionally, the first WUS is obtained through OOK modulation. The OOK modulation refers to modulation of a sequence of digital form into a radio signal with a multi-carrier OOK (MC-OOK) waveform.

In some embodiments, the first WUS is modulated in the following steps.

At step 1, a first sequence corresponding to first wake-up indication information is obtained.

In some embodiments, the first sequence is any one of: an original sequence that does not need to be encoded; an original sequence before encoding; an encoded sequence after completing encoding of the original sequence; or an encoded sequence after performing at least one level of multi-level encoding on the original sequence.

In some embodiments, when a sequence length of the first sequence is not an integer multiple of *M*, the first sequence is pre-processed to obtain a second sequence whose sequence length is an integer multiple of *M*. *M* is the number of OOK symbols transmitted in a preset duration. The preset duration is determined based on a basic time-domain unit in a cellular communication system or Wi-Fi system. In some embodiments, the preset duration includes *t* OFDM symbols, and *M* OOK symbols may be transmitted in the *t* OFDM symbols. *M* is the number of OOK symbols transmitted in the *t* OFDM symbols. A value of *t* is a positive integer.

At step 2, at least one sequence segment is obtained by dividing the first sequence.

In some embodiments, in the case where the first sequence is pre-processed to obtain the second sequence, at least one sequence segment is obtained by dividing the second sequence.

At step 3, an OOK symbol corresponding to each sequence segment is obtained by performing OOK modulation on the sequence segment.

In some embodiments, the OOK modulation includes at least one of upsampling/spreading/sequence mapping, time-frequency transform, determination of subcarrier coefficients, or time-frequency inverse transform.

Upsampling/spreading/sequence mapping refers to repeating each information or element corresponding to a signal *K* times, where *K* is a positive integer greater than 1. Taking spreading as an example, assuming that a first WUS sequence corresponding to the first WUS is {1,0,0,1} and spreading factor *K*=4, then {1,1,1,1,0,0,0,0,0,0,0,0,1,1,1,1} is obtained through spreading.

Time-frequency transform, also referred to as DFT, is a process of transforming a sequence in time domain into frequency-domain data of several sampling points.

Determination of subcarrier coefficients is a process of determining coefficients of multiple subcarriers during transmission according to the frequency-domain data of the several sampling points, i.e., a process of modulating the frequency-domain data obtained through time-frequency transform onto the multiple subcarriers.

Time-frequency inverse transform, also referred to as inverse discrete Fourier transform (IDFT), is a process of transforming the frequency-domain data of the several sampling points into time-domain data of the several sampling points.

Optionally, the OOK modulation further includes at least one of phase randomizer, symbol randomizer, or appending of a cyclic prefix (CP)/guard interval (GI).

Phase randomizer is a process of processing intermediate data using a phase randomizer factor or a phase randomizer sequence. The intermediate data is intermediate process data generated during the OOK modulation. By introducing the phase randomizer in the OOK modulation, the energy in the frequency spectrum can be flattened, thereby improving frequency selectivity and anti-interference capability.

Symbol randomizer is to process OOK symbols and then eliminate spectral lines in power spectral density (PSD), to satisfy communication requirements for eliminating spectral lines in some communication systems (for example, 802.11).

Appending of a CP/GI refers to adding the CP/GI symbol by symbol or entirely to reduce or eliminate multipath transmission interference received during transmission of OOK symbols, thereby improving the receiving quality of OOK symbols.

In some embodiments, the first WUS carries identification (ID) information of a target terminal device. When the first WUS carries the ID information of the target terminal device, the first WUS is received by the target terminal device.

In some embodiments, the first WUS carries group ID information of a target terminal device group. When the first WUS carries the group ID information of the target terminal device group, the first WUS is received by all or part of terminal devices in the target terminal device group.

In some embodiments, wake-up of the terminal device is indicated by ID information or group ID information, or wake-up of the terminal device is indicated by mapping different ID information or group ID information into a bitmap.

In some embodiments, at least one of the first WUS or the second WUS is detected in at least one of the following three manners.

In manner 1, at least one of the first WUS or the second WUS is detected based on a measurement result of a measurement signal.

In manner 2, at least one of the first WUS or the second WUS is detected based on a detection period configured.

In manner 3, at least one of the first WUS or the second WUS is detected based on an indication signalling transmitted by a network device.

Based on these three different manners, at least one of the first WUS or the second WUS is detected in different cases, thereby satisfying requirements of different communication scenarios.

In manner 1, at least one of the first WUS or the second WUS is detected based on the measurement result of the measurement signal.

In some embodiments, at least one of the first WUS or the second WUS is detected based on a measurement result of a first measurement signal; or, at least one of the first WUS or the second WUS is detected based on a measurement result of a second measurement signal; or, at least one of the first WUS or the second WUS is detected based on the measurement result of the first measurement signal and the measurement result of the second measurement signal. The first measurement signal is associated with the first WUS, and the second measurement signal is associated with the second WUS. The first measurement signal and the second measurement signal are reference signals.

In some embodiments, the measurement result includes a signal quality, and the signal quality is determined based on a signal to interference plus noise ratio (SINR) or a signal strength. The SINR refers to a ratio of a signal to noise, typically with a unit of decibel (dB). When the SINR has a larger value, it indicates less noise and better signal quality. When the SINR has a smaller value, it indicates more noise and poorer signal quality. The signal strength refers to a strength or power level of a received signal, typically with a unit of decibel-milliwatt (dBm). When the signal strength has a larger value, it indicates a high signal strength. When the signal strength has a smaller value, it indicates a low signal strength.

In some embodiments, a waveform of the first measurement signal is similar to the waveform 610 in FIG. 6, and a signal sequence used for the first measurement signal includes at least one of a CAZAC sequence, a PN sequence, a Gold sequence, an M sequence, or a Hadamard sequence.

In some embodiments, the second measurement signal includes at least one of: a synchronization signal block (SSB), a channel state information reference signal (CSI-RS), a transmit reference signal (TRS), or a phase-tracking reference signal (PT-RS).

At least one of the first WUS or the second WUS is detected according to the measurement result of the first measurement signal and/or the measurement result of the second measurement signal, and when a signal quality of a measurement signal is relatively high, a WUS corresponding to the measurement signal is detected, thereby improving the detection success rate.

In some embodiments, when a signal quality of the first measurement signal is greater than a first threshold, the first WUS is detected. When the signal quality of the first measurement signal is less than the first threshold, the second WUS is detected.

In some embodiments, when a signal quality of the second measurement signal is greater than a second threshold, the second WUS is detected. When the signal quality of the second measurement signal is less than the second threshold, the first WUS is detected.

In some embodiments, the first threshold is the same as or different from the second threshold. When the first threshold is different from the second threshold, a difference between the first threshold and the second threshold is a first difference. During configuration, the network device may independently configure the first threshold and the second threshold, or configure the first threshold and the first difference, or configure the second threshold and the first difference.

In some embodiments, when a signal quality of the first measurement signal is greater than a first threshold and a signal quality of the second measurement signal is greater than a second threshold, the first WUS and the second WUS are detected. When the signal quality of the first measurement signal is greater than the first threshold and the signal quality of the second measurement signal is less than the second threshold, the first WUS is detected. When the signal quality of the first measurement signal is less than the first threshold and the signal quality of the second measurement signal is greater than the second threshold, the second WUS is detected.

By comparing signal qualities of measurement signals with different thresholds, the first WUS and/or the second WUS are selectively detected, thereby reducing detection energy consumption.

In some embodiments, when the signal quality of the first measurement signal is less than the first threshold and the signal quality of the second measurement signal is less than the second threshold, detection of a control channel is initiated. The detection of the control channel includes at least one of DRX detection or paging detection. In this case, the first WUS and the second WUS are no longer detected subsequently. That is, a WUS mechanism is not used. The DRX detection is initiated according to a DRX cycle, and the paging detection is initiated according to a paging occasion.

The signal quality of the first measurement signal being less than the first threshold and the signal quality of the second measurement signal being less than the second threshold may indicate that the detection of the first measurement signal and the second measurement signal has failed. In this case, since the detection of the first WUS and the second WUS is likely to fail, the detection of the control channel is directly initiated without detecting the first WUS and the second WUS. Compared with detecting the first WUS and the second WUS before initiating the detection of the control channel, this reduces the power consumption of the terminal device.

In manner 2, at least one of the first WUS or the second WUS is detected based on the detection period configured.

In some embodiments, the detection period includes a first period and a second period. The first WUS is detected based on the first period, and when the first WUS is detected, the second WUS is detected based on the second period. The first period is associated with the first WUS, and the second period is associated with the second WUS.

In some embodiments, the first period is greater than the second period. The first period includes a first time period, where the first time period is used for detecting the first WUS. The second period includes a second time period, where the second time period is used for detecting the second WUS.

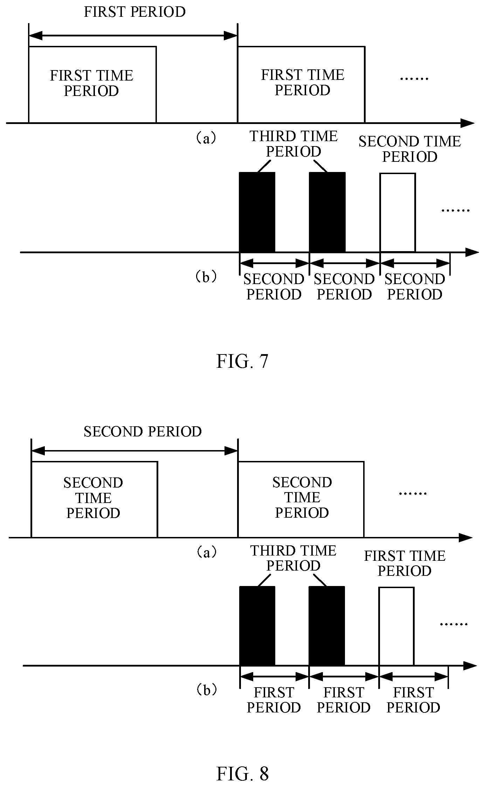

FIG. 7 is a schematic diagram illustrating a first period and a second period provided in an exemplary embodiment of the disclosure. Each first period includes one first time period, and each second period includes one second time period.

In some embodiments, when the first WUS is detected within the *i*-th first period, the second WUS is detected in a third time period within the (*i*+1)-th first period. The third time period is an intersection of the first time period and the second time period, and *i* is a positive integer.

Exemplarily, when *i*=1, if the first WUS is detected within the 1st first period, the second WUS is detected in a third time period within the 2nd first period. As illustrated in FIG. 7, the second WUS is detected in two third time periods indicated by black squares.

Since the second WUS is generally not detected and is detected only after the first WUS is detected, this saves more power compared with continuously detecting the second WUS, thereby reducing the power consumption of the terminal device.

In some embodiments, the detection period includes a first period and a second period. The second WUS is detected based on the second period, and when the second WUS is detected, the first WUS is detected based on the first period. The first period is associated with the first WUS, and the second period is associated with the second WUS.

In some embodiments, the first period is less than the second period. The first period includes a first time period, where the first time period is used for detecting the first WUS. The second period includes a second time period, where the second time period is used for detecting the second WUS.

FIG. 8 is a schematic diagram illustrating a first period and a second period provided in an exemplary embodiment of the disclosure. Each first period includes one first time period, and each second period includes one second time period.

In some embodiments, when the second WUS is detected within the *i*-th second period, the first WUS is detected in a third time period within the (*i*+1)-th second period. The third time period is an intersection of the first time period and the second time period, and *i* is a positive integer.

Exemplarily, when *i*=1, if the second WUS is detected within the 1st second period, the first WUS is detected in a third time period within the 2nd second period. As illustrated in FIG. 8, the first WUS is detected in two third time periods indicated by black squares.

In the case where the network device knows in advance that arrival time of downlink data is around time T1 but specific arrival time is unknown, the network device transmits the second WUS to cause the terminal device to enter a relatively short detection period. Upon actual arrival of the downlink data, the terminal device is quickly woken up by the first WUS to receive the downlink data. For example, the arrival time of the downlink data is around 00:00:00, a second period is configured as 5 seconds, and a first period is configured as 1 second. In the case where the second WUS is detected within the *i*-th second period, the first WUS is detected in a third time period within the (*i*+1)-th second period, where *i* is a positive integer. Therefore, compared with continuously detecting the first WUS and the second WUS, the power consumption is lower, and when there is data to be transmitted, the data can be immediately transmitted, thereby reducing data delay.

In manner 3, at least one of the first WUS or the second WUS is detected based on the indication signalling transmitted by the network device.

In some embodiments, when the indication signalling indicates detection of the first WUS, the first WUS is detected. When the indication signalling indicates detection of the second WUS, the second WUS is detected. When the indication signalling indicates detection of the first WUS and the second WUS, the first WUS and the second WUS are detected.

The detection of a WUS(s) according to the indication signalling requires no additional design and is simpler and easier to implement.

In some embodiments, before at least one of the first WUS or the second WUS is detected based on the indication signalling transmitted by the network device, the method further includes the following. A measurement result of a first measurement signal and/or a measurement result of a second measurement signal are transmitted. The measurement result is used for assisting the network device in transmitting the indication signalling.

The transmission of the measurement result to the network device helps the network device determine an indication signalling to be transmitted. For example, when the measurement result of the first measurement signal indicates that a signal quality of the first measurement signal is greater than a first threshold, the network device transmits a first indication signalling. The first indication signalling indicates the terminal device to detect the first WUS.

For another example, when the measurement result of the first measurement signal indicates that a signal quality of the first measurement signal is less than a first threshold, and the measurement result of the second measurement signal indicates that a signal quality of the second measurement signal is less than a second threshold, the network device transmits a fourth indication signalling. The fourth indication signalling indicates the terminal device to initiate detection of a control channel.

The transmission of a measurement result of a measurement signal assists the network device in transmitting the indication signalling, so that the network device can reasonably transmit the indication signalling according to a signal quality of the measurement signal, thereby reducing transmission of an unreasonable indication signalling by the network device. For example, when a signal quality of the second measurement signal is less than a second threshold, the network device does not transmit an indication signalling indicating detection of the second WUS.

In summary, according to the method provided in this embodiment, at least one of the first WUS or the second WUS is detected, where the detection energy consumption for the first WUS is lower than the detection energy consumption for the second WUS. By using the first WUS with the lower detection energy consumption, the power consumption of the terminal device can be reduced. By using the second WUS with a wider coverage area, the communication range of the terminal device can be ensured. By using the first WUS and the second WUS in combination, communication scenarios with different requirements can be flexibly handled.

According to the method provided in this embodiment, at least one of the first WUS or the second WUS is also detected based on the measurement result of the measurement signal. According to a magnitude relationship between signal qualities of measurement signals and different thresholds, at least one of the first WUS or the second WUS is selectively detected, to reduce detection energy consumption, thereby reducing the power consumption of the terminal device.

According to the method provided in this embodiment, at least one of the first WUS or the second WUS is also detected based on the detection period configured. The first WUS is detected based on a relatively long period, and when the first WUS is detected, the second WUS is detected based on a relatively short period. As such, there is no need to continuously detect both WUSs, thereby reducing the power consumption of the terminal device.

According to the method provided in this embodiment, at least one of the first WUS or the second WUS is also detected based on the indication signalling transmitted by the network device. The detection of a WUS(s) according to the indication signalling requires no additional design and is simpler and easier to implement.

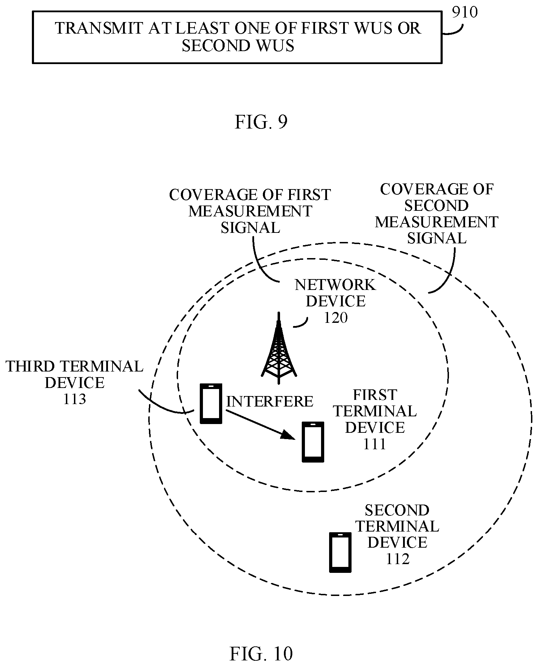

FIG. 9 is a flowchart of a method for WUS detection provided in an exemplary embodiment of the disclosure. The method is performed by a network device and includes the following.

At 910, at least one of a first WUS or a second WUS is transmitted.

Detection energy consumption for the first WUS is lower than detection energy consumption for the second WUS.

In some embodiments, the network device further transmits a measurement signal. The measurement signal is used by a terminal device to detect at least one of the first WUS or the second WUS based on a measurement result of the measurement signal.

In some embodiments, the measurement signal includes a first measurement signal and a second measurement signal. The first measurement signal is associated with the first WUS, and the second measurement signal is associated with the second WUS.

For specific details of the measurement signal, reference is made to the embodiments at the terminal device side, which will not be repeated herein.

In some embodiments, the network device further configures a detection period. The detection period is used by a terminal device to detect at least one of the first WUS or the second WUS.

In some embodiments, the detection period includes a first period and a second period. The first period is associated with the first WUS, and the second period is associated with the second WUS.

In some embodiments, the first period is greater than the second period. The first period includes a first time period, where the first time period is used by the terminal device to detect the first WUS. The second period includes a second time period, where the second time period is used by the terminal device to detect the second WUS.

In some embodiments, the first period is less than the second period. The first period includes a first time period, where the first time period is used by the terminal device to detect the first WUS. The second period includes a second time period, where the second time period is used by the terminal device to detect the second WUS.

For specific details of the detection period, reference is made to the embodiments at the terminal device side, which will not be repeated herein.

In some embodiments, when there is downlink data or a paging instruction to be transmitted, the first WUS and the second WUS are transmitted.

In some embodiments, the network device further transmits an indication signalling. The indication signalling indicates a terminal device to detect at least one of the first WUS or the second WUS.

In some embodiments, the indication signalling includes at least one of a first indication signalling, a second indication signalling, or a third indication signalling. The first indication signalling indicates the terminal device to detect the first WUS. The second indication signalling indicates the terminal device to detect the second WUS. The third indication signalling indicates the terminal device to detect the first WUS and the second WUS.

In some embodiments, before transmitting the indication signalling, the network device further transmits a measurement signal and receives a measurement result of the measurement signal. The measurement result of the measurement signal is a signal quality obtained by the terminal device through measurement on the measurement signal.

In some embodiments, the measurement result includes a signal quality, and the signal quality is determined based on an SINR or a signal strength. The SINR refers to a ratio of a signal to noise, typically with a unit of dB. When the SINR has a larger value, it indicates less noise and better signal quality. When the SINR has a smaller value, it indicates more noise and poorer signal quality. The signal strength refers to a strength or power level of a received signal, typically with a unit of dBm. When the signal strength has a larger value, it indicates a high signal strength. When the signal strength has a smaller value, it indicates a low signal strength.

In some embodiments, a waveform of the first measurement signal is similar to the waveform 610 in FIG. 6, and a signal sequence used for the first measurement signal includes at least one of a CAZAC sequence, a PN sequence, a Gold sequence, an M sequence, or a Hadamard sequence.

In some embodiments, the second measurement signal includes at least one of: an SSB, a CSI-RS, a TRS, or a PT-RS.

In some embodiments, the indication signalling is transmitted based on the measurement result of the measurement signal.

In some embodiments, the indication signalling is transmitted based on the measurement result of the measurement signal as follows. The indication signalling is transmitted based on a measurement result of a first measurement signal. Alternatively, the indication signalling is transmitted based on a measurement result of a second measurement signal. Alternatively, the indication signalling is transmitted based on the measurement result of the first measurement signal and the measurement result of the second measurement signal. The first measurement signal is associated with the first WUS, and the second measurement signal is associated with the second WUS.

In some embodiments, both the first measurement signal and the second measurement signal are reference signals. If a signal quality of the first measurement signal is poorer and a signal quality of the second measurement signal is better, then the indication signalling indicates detection of the second WUS. If the signal quality of the second measurement signal is poorer and the signal quality of the first measurement signal is better, then the indication signalling indicates detection of the first WUS.

In some embodiments, when a signal quality of the first measurement signal is greater than a first threshold, a first indication signalling is transmitted, where the first indication signalling indicates the terminal device to detect the first WUS. When the signal quality of the first measurement signal is less than the first threshold, a second indication signalling is transmitted, where the second indication signalling indicates the terminal device to detect the second WUS.

In some embodiments, when a signal quality of the second measurement signal is greater than a second threshold, a second indication signalling is transmitted, where the second indication signalling indicates the terminal device to detect the second WUS. When the signal quality of the second measurement signal is less than the second threshold, a first indication signalling is transmitted, where the first indication signalling indicates the terminal device to detect the first WUS.

In some embodiments, the first threshold is the same as or different from the second threshold. When the first threshold is different from the second threshold, a difference between the first threshold and the second threshold is a first difference. During configuration, the network device may independently configure the first threshold and the second threshold, or configure the first threshold and the first difference, or configure the second threshold and the first difference.

In some embodiments, when a signal quality of the first measurement signal is greater than a first threshold and a signal quality of the second measurement signal is greater than a second threshold, a third indication signalling is transmitted, where the third indication signalling indicates the terminal device to detect the first WUS and the second WUS. When the signal quality of the first measurement signal is greater than the first threshold and the signal quality of the second measurement signal is less than the second threshold, a first indication signalling is transmitted, where the first indication signalling indicates the terminal device to detect the first WUS. When the signal quality of the first measurement signal is less than the first threshold and the signal quality of the second measurement signal is greater than the second threshold, a second indication signalling is transmitted, where the second indication signalling indicates the terminal device to detect the second WUS. When the signal quality of the first measurement signal is less than the first threshold and the signal quality of the second measurement signal is less than the second threshold, a fourth indication signalling is transmitted, where the fourth indication signalling indicates the terminal device to initiate detection of a control channel. The detection of the control channel includes at least one of DRX detection or paging detection.

In some embodiments, failure to detect the signal quality of the first measurement signal is considered as the signal quality of the first measurement signal being less than the first threshold, and failure to detect the signal quality of the second measurement signal is considered as the signal quality of the second measurement signal being less than the second threshold.

A corresponding indication signalling is transmitted according to a magnitude relationship between signal qualities of first measurement signals and different thresholds and a magnitude relationship between signal qualities of second measurement signals and different thresholds, thereby adapting to communication scenarios with different channel qualities and achieving flexibility and energy saving.

In some embodiments, the first WUS is transmitted when there is downlink data or a paging instruction to be transmitted.

In some embodiments, the second WUS is transmitted when there is downlink data or a paging instruction to be transmitted.

In some embodiments, the first WUS and the second WUS are transmitted when there is downlink data or a paging instruction to be transmitted.

The first WUS and/or the second WUS are transmitted on demand, and are not transmitted when there is no downlink data or paging instruction to be transmitted.

In some embodiments, the first WUS is a signal having a first waveform, and the second WUS is a signal having a second waveform. The first waveform is obtained based on a single-carrier modulation scheme, and the second waveform is obtained based on a multi-carrier modulation scheme.

In some embodiments, the first waveform includes at least one of an OOK waveform, a BSK waveform, an ASK waveform, or an FSK waveform. The second waveform includes an OFDM waveform.

For specific details of the first waveform and the second waveform, reference is made to the embodiments at the terminal device side, which will not be repeated herein.

In summary, according to the method provided in this embodiment, at least one of the first WUS or the second WUS is transmitted, where the detection energy consumption for the first WUS is lower than the detection energy consumption for the second WUS, so that the terminal device detects at least one of the first WUS or the second WUS. For the terminal device, the power consumption can be reduced by using the first WUS with the lower detection energy consumption, the communication range can be ensured by using the second WUS with a wider coverage area, and communication scenarios with different requirements can be flexibly handled by using the first WUS and the second WUS in combination.

According to the method provided in this embodiment, the measurement signal is also transmitted, where the measurement signal is used by the terminal device to detect at least one of the first WUS or the second WUS based on the measurement result of the measurement signal. The terminal device selectively detects at least one of the first WUS or the second WUS according to a magnitude relationship between signal qualities of measurement signals and different thresholds, to reduce detection energy consumption, thereby reducing the power consumption of the terminal device.

According to the method provided in this embodiment, the detection period is also configured, where the detection period is used by the terminal device to detect at least one of the first WUS or the second WUS. The terminal device detects the first WUS based on a relatively long period, and when the first WUS is detected, the terminal device detects the second WUS based on a relatively short period. As such, there is no need to continuously detect both WUSs, thereby reducing the power consumption of the terminal device.

According to the method provided in this embodiment, the indication signalling is also transmitted, where the indication signalling indicates the terminal device to detect at least one of the first WUS or the second WUS. The detection of a WUS(s) according to the indication signalling requires no additional design and is simpler and easier to implement. In addition, a corresponding indication signalling is transmitted according to a magnitude relationship between signal qualities of first measurement signals and different thresholds and a magnitude relationship between signal qualities of second measurement signals and different thresholds, thereby adapting to communication scenarios with different channel qualities and achieving flexibility and energy saving.

In the above embodiments, the embodiment corresponding to FIG. 4 and the embodiment corresponding to FIG. 9 may be implemented separately or in combination, which is not limited in the disclosure. FIG. 10 is a schematic diagram of a communication scenario provided in an exemplary embodiment of the disclosure.

In some embodiments, a first terminal device 111 and a third terminal device 113 are within the coverage of a first measurement signal, and a second terminal device 112 is within the coverage of a second measurement signal. Since the first measurement signal is associated with a first WUS and the second measurement signal is associated with a second WUS, the coverage of the first measurement signal is also the coverage of the first WUS, and the coverage of the second measurement signal is also the coverage of the second WUS. The first WUS (first measurement signal) and the second WUS (second measurement signal) may be detected by the first terminal device 111 and the third terminal device 113, while only the second WUS (second measurement signal) may be detected by the second terminal device 112.

In some embodiments, the second terminal device 112 transmits a measurement result of the first measurement signal and a measurement result of the second measurement signal. Since no first measurement signal is detected, it is considered that a signal quality of the first measurement signal is less than a first threshold. In addition, since a signal quality of the second measurement signal is greater than a second threshold, a network device 120 transmits a second indication signalling, where the second indication signalling indicates the second terminal device 112 to detect the second WUS.

In some embodiments, the second terminal device 112 detects only the second WUS. To ensure that the second terminal device 112 can receive paging in time, in the case of detecting only the second WUS, the network device configures a relatively short second period for the second terminal device 112.

In some embodiments, the first terminal device 111 transmits a measurement result of the first measurement signal and a measurement result of the second measurement signal. Since a signal quality of the first measurement signal is greater than a first threshold and a signal quality of the second measurement signal is greater than a second threshold, the network device 120 transmits a third indication signalling, where the third indication signalling indicates the first terminal device 111 to detect the first WUS and the second WUS.

In some embodiments, the network device 120 configures a first period and a second period. The first period is greater than the second period. The first period includes a first time period, where the first time period is used for detecting the first WUS. The second period includes a second time period, where the second time period is used for detecting the second WUS.

Exemplarily, in the case where the first terminal device 111 has detected the first WUS within the 1st first period, the first terminal device 111 detects the second WUS in a third time period within the 2nd first period. The third time period is an intersection of the first time period and the second time period.

Since the second WUS is generally not detected and is detected only after the first WUS is detected, this saves more power compared with continuously detecting the second WUS, thereby reducing the power consumption of a terminal device.

In some embodiments, the network device 120 configures a first period and a second period. The first period is less than the second period. The first period includes a first time period, where the first time period is used for detecting the first WUS. The second period includes a second time period, where the second time period is used for detecting the second WUS.

Exemplarily, in the case where the first terminal device 111 has detected the second WUS within the 1st first period, the first terminal device 111 detects the first WUS in a third time period within the 2nd second period. The third time period is an intersection of the first time period and the second time period.

In the case where the network device 120 knows in advance that arrival time of downlink data is around time T1 but specific arrival time is unknown, the network device 120 transmits the second WUS to cause the first terminal device 111 to enter a relatively short detection period. Upon actual arrival of the downlink data, the first terminal device 111 is quickly woken up by the first WUS to receive the downlink data. For example, the arrival time of the downlink data is around 00:00:00, a second period is configured as 5 seconds, and a first period is configured as 1 second. In the case where the second WUS is detected within the *i*-th second period, the first WUS is detected in a third time period within the (*i*+1)-th second period, where *i* is a positive integer. Therefore, compared with continuously detecting the first WUS and the second WUS, the power consumption is lower, and when there is data to be transmitted, the data can be immediately transmitted, thereby reducing data delay.

In some embodiments, the third terminal device 113 may interfere with the detection of the second measurement signal by the first terminal device 111, causing a signal quality of the second measurement signal to be less than a second threshold. The first terminal device 111 transmits a measurement result of the first measurement signal and a measurement result of the second measurement signal. Since a signal quality of the first measurement signal is greater than a first threshold and the signal quality of the second measurement signal is less than the second threshold, the network device 120 transmits a first indication signalling, where the first indication signalling indicates the first terminal device 111 to detect the first WUS.

In some embodiments, the first terminal device 111 detects only the first WUS. To ensure that the first terminal device 111 can receive paging in time, in the case of detecting only the first WUS, the network device configures a relatively short first period for the first terminal device 111.

In summary, the network device 120 reasonably transmits different WUSs in different scenarios based on measurement results of measurement signals transmitted by the terminal device, thereby reducing the power consumption of the terminal device.

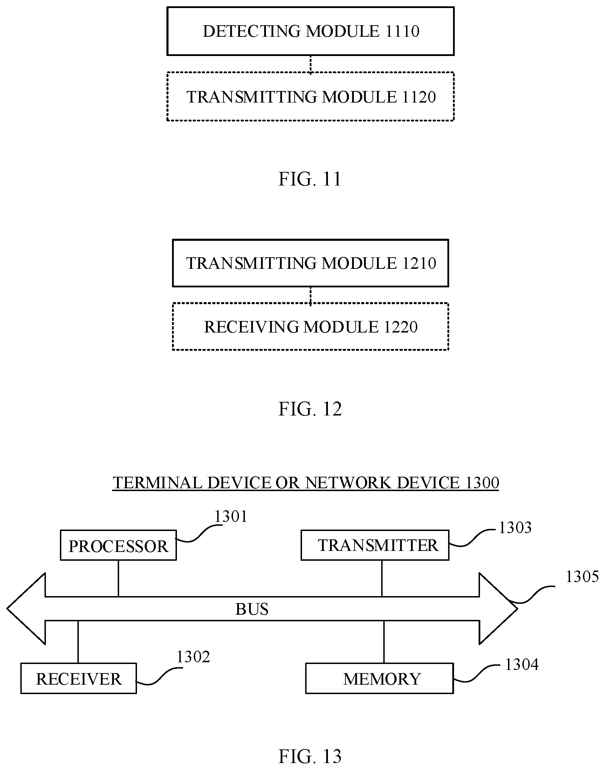

FIG. 11 is a block diagram of an apparatus for WUS detection provided in an exemplary embodiment of the disclosure. The apparatus may be implemented as a terminal device or a part of the terminal device by software, hardware, or a combination thereof. The apparatus includes a detecting module 1110. The detecting module 1110 is configured to detect at least one of a first WUS or a second WUS. Detection energy consumption for the first WUS is lower than detection energy consumption for the second WUS.

In a possible design of this embodiment, the first WUS and the second WUS have at least one of the following differences: different waveforms, different configuration periods, different time-domain locations, or different corresponding receivers.

In a possible design of this embodiment, whether the first WUS and the second WUS are received indicates whether to initiate DRX detection and paging detection. If the first WUS or the second WUS is received, it indicates to initiate the DRX detection and the paging detection. If none of the first WUS and the second WUS is received, it indicates not to initiate the DRX detection and the paging detection.

In a possible design of this embodiment, the first WUS carries first wake-up indication information, and the second WUS carries second wake-up indication information. The first wake-up indication information and the second wake-up indication information indicate whether to initiate DRX detection and paging detection as well as initiation time.

In a possible design of this embodiment, the first WUS is a signal having a first waveform, and the second WUS is a signal having a second waveform. The first waveform is obtained based on a single-carrier modulation scheme, and the second waveform is obtained based on a multi-carrier modulation scheme. The first waveform and the second waveform are both simple waveforms. Modulation schemes used include amplitude modulation, frequency modulation, phase modulation, and the like. The single-carrier modulation is a modulation technology in which only one carrier is used in a fixed frequency band, and the multi-carrier modulation is a modulation technology in which multiple carriers are used in a fixed frequency band.

FIG. 5 is a schematic diagram illustrating amplitude modulation provided in an exemplary embodiment of the disclosure. Exemplarily, a signal sequence corresponding to the first WUS is 101010. A non-modulated carrier is modulated based on the signal sequence, to obtain a waveform of a modulated carrier illustrated in FIG. 5.

In a possible design of this embodiment, the first waveform includes at least one of an OOK waveform, a BSK waveform, an ASK waveform, or an FSK waveform. The second waveform includes an OFDM waveform.

In the related art, by using the second WUS, the terminal device enters active time in a DRX mechanism upon receiving the second WUS, thereby achieving power saving. The second WUS has a PDCCH waveform, and may be referred to as an ordinary WUS. The second WUS has relatively high detection energy consumption, which leads to an increase in operating energy consumption of the apparatus for WUS detection. In embodiments of the disclosure, by using the first WUS with the lower detection energy consumption, further power saving can be achieved. By using the second WUS, a larger communication area can be covered. The detection of at least one of two types of WUSs based on specific scenarios may adapt to different channel environments, thereby achieving flexibility and energy saving.

FIG. 6 is a schematic diagram illustrating generation of a first WUS provided in an exemplary embodiment of the disclosure. In a possible design of this embodiment, first wake-up indication information is carried in the first WUS. The first wake-up indication information is converted into a signal sequence with a length of *K*, where *K* is a positive integer greater than 1. The conversion manner includes at least one of upsampling, spreading, or sequence mapping. Optionally, for converting the first wake-up indication information in a sequence mapping manner, the sequence includes at least one of a CAZAC sequence, a PN sequence, a Gold sequence, an M sequence, or a Hadamard sequence.

The converted signal sequence is subject to DFT to form multiple subcarrier signals. For example, DFT is performed on the converted signal sequence y(*n*) to obtain x(1), x(2), and so on until x(*n*). The multiple subcarrier signals are subject to IFFT to generate the first WUS. A waveform of the first WUS in time domain is represented by a first waveform 610. Optionally, the multiple subcarrier signals may also be multiplexed with other NR signals before IFFT. Optionally, instead of DFT and IFFT, single-carrier amplitude modulation is directly performed on the converted signal sequence to obtain the first WUS.

Optionally, the first WUS is obtained through OOK modulation. The OOK modulation refers to modulation of a sequence of digital form into a radio signal with an MC-OOK waveform.

In a possible design of this embodiment, the first WUS carries ID information of a target apparatus for WUS detection. When the first WUS carries the ID information of the target apparatus for WUS detection, the first WUS is received by the target apparatus for WUS detection.

In a possible design of this embodiment, the first WUS carries group ID information of a target apparatus group for WUS detection. When the first WUS carries the group ID information of the target apparatus group for WUS detection, the first WUS is received by all or part of apparatuses for WUS detection in the target apparatus group for WUS detection.

In a possible design of this embodiment, wake-up of the apparatus for WUS detection is indicated by ID information or group ID information, or wake-up of the apparatus for WUS detection is indicated by mapping different ID information or group ID information into a bitmap.

In a possible design of this embodiment, the detecting module 1110 is configured for at least one of the following three detection manners.

In manner 1, at least one of the first WUS or the second WUS is detected based on a measurement result of a measurement signal.

In manner 2, at least one of the first WUS or the second WUS is detected based on a detection period configured.

In manner 3, at least one of the first WUS or the second WUS is detected based on an indication signalling transmitted by an apparatus for WUS transmission.

In manner 1, at least one of the first WUS or the second WUS is detected based on the measurement result of the measurement signal.

In a possible design of this embodiment, the detecting module 1110 is configured to detect at least one of the first WUS or the second WUS based on a measurement result of a first measurement signal; or detect at least one of the first WUS or the second WUS based on a measurement result of a second measurement signal; or detect at least one of the first WUS or the second WUS based on the measurement result of the first measurement signal and the measurement result of the second measurement signal. The first measurement signal is associated with the first WUS, and the second measurement signal is associated with the second WUS. The first measurement signal and the second measurement signal are reference signals.

In a possible design of this embodiment, the measurement result includes a signal quality, and the signal quality is determined based on an SINR or a signal strength. The SINR refers to a ratio of a signal to noise, typically with a unit of dB. When the SINR has a larger value, it indicates less noise and better signal quality. When the SINR has a smaller value, it indicates more noise and poorer signal quality. The signal strength refers to a strength or power level of a received signal, typically with a unit of dBm. When the signal strength has a larger value, it indicates a high signal strength. When the signal strength has a smaller value, it indicates a low signal strength.

In a possible design of this embodiment, a waveform of the first measurement signal is similar to the waveform 610 in FIG. 6, and a signal sequence used for the first measurement signal includes at least one of a CAZAC sequence, a PN sequence, a Gold sequence, an M sequence, or a Hadamard sequence.

In a possible design of this embodiment, the second measurement signal includes at least one of: an SSB, a CSI-RS, a TRS, or a PT-RS.

At least one of the first WUS or the second WUS is detected according to the measurement result of the first measurement signal and/or the measurement result of the second measurement signal, and when a signal quality of a measurement signal is relatively high, a WUS corresponding to the measurement signal is detected, thereby improving the detection success rate.

In a possible design of this embodiment, the detecting module 1110 is configured to: detect the first WUS, when a signal quality of the first measurement signal is greater than a first threshold; and detect the second WUS, when the signal quality of the first measurement signal is less than the first threshold.

In a possible design of this embodiment, the detecting module 1110 is configured to: detect the second WUS, when a signal quality of the second measurement signal is greater than a second threshold; and detect the first WUS, when the signal quality of the second measurement signal is less than the second threshold.

In a possible design of this embodiment, the detecting module 1110 is configured to: detect the first WUS and the second WUS, when a signal quality of the first measurement signal is greater than a first threshold and a signal quality of the second measurement signal is greater than a second threshold; detect the first WUS, when the signal quality of the first measurement signal is greater than the first threshold and the signal quality of the second measurement signal is less than the second threshold; and detect the second WUS, when the signal quality of the first measurement signal is less than the first threshold and the signal quality of the second measurement signal is greater than the second threshold.

By comparing signal qualities of measurement signals with different thresholds, the first WUS and/or the second WUS are selectively detected, thereby reducing detection energy consumption.

In a possible design of this embodiment, the detecting module 1110 is further configured to initiate detection of a control channel, when the signal quality of the first measurement signal is less than the first threshold and the signal quality of the second measurement signal is less than the second threshold. The detection of the control channel includes at least one of DRX detection or paging detection. In this case, the first WUS and the second WUS are no longer detected subsequently. That is, a WUS mechanism is not used. The DRX detection is initiated according to a DRX cycle, and the paging detection is initiated according to a paging occasion.

The signal quality of the first measurement signal being less than the first threshold and the signal quality of the second measurement signal being less than the second threshold may indicate that the detection of the first measurement signal and the second measurement signal has failed. In this case, since the detection of the first WUS and the second WUS is likely to fail, the detection of the control channel is directly initiated without detecting the first WUS and the second WUS. Compared with detecting the first WUS and the second WUS before initiating the detection of the control channel, this reduces the power consumption of the apparatus for WUS detection.

In manner 2, at least one of the first WUS or the second WUS is detected based on the detection period configured.

In a possible design of this embodiment, the detection period includes a first period and a second period. The detecting module 1110 is configured to: detect the first WUS based on the first period; and detect the second WUS based on the second period, when the first WUS is detected. The first period is associated with the first WUS, and the second period is associated with the second WUS.

In a possible design of this embodiment, the first period is greater than the second period. The first period includes a first time period, where the first time period is used for detecting the first WUS. The second period includes a second time period, where the second time period is used for detecting the second WUS.

FIG. 7 is a schematic diagram illustrating a first period and a second period provided in an exemplary embodiment of the disclosure. Each first period includes one first time period, and each second period includes one second time period.

In a possible design of this embodiment, the detecting module 1110 is configured to detect the second WUS in a third time period within the (*i*+1)-th first period, when the first WUS is detected within the *i*-th first period. The third time period is an intersection of the first time period and the second time period, and *i* is a positive integer.

Exemplarily, when *i*=1, if the first WUS is detected within the 1st first period, the second WUS is detected in a third time period within the 2nd first period. As illustrated in FIG. 7, the second WUS is detected in two third time periods indicated by black squares.

Since the second WUS is generally not detected and is detected only after the first WUS is detected, this saves more power compared with continuously detecting the second WUS, thereby reducing the power consumption of the apparatus for WUS detection.

In a possible design of this embodiment, the detection period includes a first period and a second period. The detecting module 1110 is configured to: detect the second WUS based on the second period; and detect the first WUS based on the first period, when the second WUS is detected. The first period is associated with the first WUS, and the second period is associated with the second WUS.

In a possible design of this embodiment, the first period is less than the second period. The first period includes a first time period, where the first time period is used for detecting the first WUS. The second period includes a second time period, where the second time period is used for detecting the second WUS.

FIG. 8 is a schematic diagram illustrating a first period and a second period provided in an exemplary embodiment of the disclosure. Each first period includes one first time period, and each second period includes one second time period.

In a possible design of this embodiment, the detecting module 1110 is configured to detect the first WUS in a third time period within the (*i*+1)-th second period, when the second WUS is detected within the *i*-th second period. The third time period is an intersection of the first time period and the second time period, and *i* is a positive integer.

Exemplarily, when *i*=1, if the second WUS is detected within the 1st second period, the first WUS is detected in a third time period within the 2nd second period. As illustrated in FIG. 8, the first WUS is detected in two third time periods indicated by black squares.

In the case where the apparatus for WUS transmission knows in advance that arrival time of downlink data is around time T1 but specific arrival time is unknown, the apparatus for WUS transmission transmits the second WUS to cause the apparatus for WUS detection to enter a relatively short detection period. Upon actual arrival of the downlink data, the apparatus for WUS detection is quickly woken up by the first WUS to receive the downlink data. For example, the arrival time of the downlink data is around 00:00:00, a second period is configured as 5 seconds, and a first period is configured as 1 second. In the case where the second WUS is detected within the *i*-th second period, the first WUS is detected in a third time period within the (*i*+1)-th second period, where *i* is a positive integer. Therefore, compared with continuously detecting the first WUS and the second WUS, the power consumption is lower, and when there is data to be transmitted, the data can be immediately transmitted, thereby reducing data delay.

In manner 3, at least one of the first WUS or the second WUS is detected based on the indication signalling transmitted by the apparatus for WUS transmission.

In a possible design of this embodiment, the detecting module 1110 is configured to: detect the first WUS, when the indication signalling indicates detection of the first WUS; detect the second WUS, when the indication signalling indicates detection of the second WUS; and detect the first WUS and the second WUS, when the indication signalling indicates detection of the first WUS and the second WUS.

The detection of a WUS(s) according to the indication signalling requires no additional design and is simpler and easier to implement.

In a possible design of this embodiment, a transmitting module 1120 is configured to transmit a measurement result of a first measurement signal and/or a measurement result of a second measurement signal. The measurement result is used for assisting the apparatus for WUS transmission in transmitting the indication signalling.

The transmission of the measurement result to the apparatus for WUS transmission helps the apparatus for WUS transmission determine an indication signalling to be transmitted. For example, when the measurement result of the first measurement signal indicates that a signal quality of the first measurement signal is greater than a first threshold, the apparatus for WUS transmission transmits a first indication signalling. The first indication signalling indicates the apparatus for WUS detection to detect the first WUS.

For another example, when the measurement result of the first measurement signal indicates that a signal quality of the first measurement signal is less than a first threshold, and the measurement result of the second measurement signal indicates that a signal quality of the second measurement signal is less than a second threshold, the apparatus for WUS transmission transmits a fourth indication signalling. The fourth indication signalling indicates the apparatus for WUS detection to initiate detection of a control channel.

The transmission of a measurement result of a measurement signal assists the apparatus for WUS transmission in transmitting the indication signalling, so that the apparatus for WUS transmission can reasonably transmit the indication signalling according to a signal quality of the measurement signal, thereby reducing transmission of an unreasonable indication signalling by the apparatus for WUS transmission. For example, when a signal quality of the second measurement signal is less than a second threshold, the apparatus for WUS transmission does not transmit an indication signalling indicating detection of the second WUS.

In this embodiment, the detecting module 1110 may be split into at least one detecting sub-module. Each detecting sub-module, for example, a first detecting sub-module, a second detecting sub-module, and a third detecting sub-module, is configured to perform at least one of the above detection operations. The first detecting sub-module is configured to detect at least one of the first WUS or the second WUS based on the measurement result of the measurement signal, the second detecting sub-module is configured to detect at least one of the first WUS or the second WUS based on the detection period configured, and the third detecting sub-module is configured to detect at least one of the first WUS or the second WUS based on the indication signalling transmitted by the apparatus for WUS transmission. Alternatively, the first detecting sub-module is configured to detect at least one of the first WUS or the second WUS based on the detection period configured, the second detecting sub-module is configured to detect at least one of the first WUS or the second WUS based on the indication signalling transmitted by the apparatus for WUS transmission, and the third detecting sub-module is configured to detect at least one of the first WUS or the second WUS based on the measurement result of the measurement signal. Alternatively, the first detecting sub-module is configured to detect at least one of the first WUS or the second WUS based on the indication signalling transmitted by the apparatus for WUS transmission, the second detecting sub-module is configured to detect at least one of the first WUS or the second WUS based on the measurement result of the measurement signal, and the third detecting sub-module is configured to detect at least one of the first WUS or the second WUS based on the detection period configured. Functions of different detecting sub-modules are not limited in this embodiment.

In this embodiment, one detecting module 1110 is taken as an example for illustration, and the number of detecting modules 1110 is not limited.

For an introduction to functions of the detecting module 1110, reference can be made to the contents of operations at 410 in the embodiment of FIG. 4.

For an introduction to functions of the transmitting module 1120, reference can be made to the contents of operations at 410 in the embodiment of FIG. 4.

FIG. 12 is a block diagram of an apparatus for WUS transmission provided in an exemplary embodiment of the disclosure. The apparatus may be implemented as a network device or a part of the network device by software, hardware, or a combination thereof. The apparatus includes a transmitting module 1210. The transmitting module 1210 is configured to transmit at least one of a first WUS or a second WUS. Detection energy consumption for the first WUS is lower than detection energy consumption for the second WUS.

In a possible design of this embodiment, the first WUS and the second WUS have at least one of the following differences: different waveforms, different configuration periods, different time-domain locations, or different corresponding receivers.

In a possible design of this embodiment, whether the first WUS and the second WUS are received by an apparatus for WUS detection indicates whether the apparatus for WUS detection is to initiate DRX detection and paging detection. If the first WUS or the second WUS is received, it indicates to initiate the DRX detection and the paging detection. If none of the first WUS and the second WUS is received, it indicates not to initiate the DRX detection and the paging detection.

In a possible design of this embodiment, the first WUS carries first wake-up indication information, and the second WUS carries second wake-up indication information. The first wake-up indication information and the second wake-up indication information indicate whether the apparatus for WUS detection is to initiate DRX detection and paging detection as well as initiation time.

In a possible design of this embodiment, the first WUS is a signal having a first waveform, and the second WUS is a signal having a second waveform. The first waveform is obtained based on a single-carrier modulation scheme, and the second waveform is obtained based on a multi-carrier modulation scheme. The first waveform and the second waveform are both simple waveforms. Modulation schemes used include amplitude modulation, frequency modulation, phase modulation, and the like. The single-carrier modulation is a modulation technology in which only one carrier is used in a fixed frequency band, and the multi-carrier modulation is a modulation technology in which multiple carriers are used in a fixed frequency band.

FIG. 5 is a schematic diagram illustrating amplitude modulation provided in an exemplary embodiment of the disclosure. Exemplarily, a signal sequence corresponding to the first WUS is 101010. A non-modulated carrier is modulated based on the signal sequence, to obtain a waveform of a modulated carrier illustrated in FIG. 5.

In a possible design of this embodiment, the first waveform includes at least one of an OOK waveform, a BSK waveform, an ASK waveform, or an FSK waveform. The second waveform includes an OFDM waveform.

In the related art, by using the second WUS, the terminal device enters active time in a DRX mechanism upon receiving the second WUS, thereby achieving power saving. The second WUS has a PDCCH waveform, and may be referred to as an ordinary WUS. The second WUS has relatively high detection energy consumption, which leads to an increase in operating energy consumption of the apparatus for WUS detection. In embodiments of the disclosure, by using the first WUS with the lower detection energy consumption, further power saving can be achieved. By using the second WUS, a larger communication area can be covered. The detection of at least one of two types of WUSs based on specific scenarios may adapt to different channel environments, thereby achieving flexibility and energy saving.

FIG. 6 is a schematic diagram illustrating generation of a first WUS provided in an exemplary embodiment of the disclosure. In a possible design of this embodiment, first wake-up indication information is carried in the first WUS. The first wake-up indication information is converted into a signal sequence with a length of *K*, where *K* is a positive integer greater than 1. The conversion manner includes at least one of upsampling, spreading, or sequence mapping. Optionally, for converting the first wake-up indication information in a sequence mapping manner, the sequence includes at least one of a CAZAC sequence, a PN sequence, a Gold sequence, an M sequence, or a Hadamard sequence.

The converted signal sequence is subject to DFT to form multiple subcarrier signals. For example, DFT is performed on the converted signal sequence y(*n*) to obtain x(1), x(2), and so on until x(*n*). The multiple subcarrier signals are subject to IFFT to generate the first WUS. A waveform of the first WUS in time domain is represented by a first waveform 610. Optionally, the multiple subcarrier signals may also be multiplexed with other NR signals before IFFT. Optionally, instead of DFT and IFFT, single-carrier amplitude modulation is directly performed on the converted signal sequence to obtain the first WUS.

Optionally, the first WUS is obtained through OOK modulation. The OOK modulation refers to modulation of a sequence of digital form into a radio signal with an MC-OOK waveform.

In a possible design of this embodiment, the first WUS carries ID information of a target apparatus for WUS detection. When the first WUS carries the ID information of the target apparatus for WUS detection, the first WUS is received by the target apparatus for WUS detection.

In a possible design of this embodiment, the first WUS carries group ID information of a target apparatus group for WUS detection. When the first WUS carries the group ID information of the target apparatus group for WUS detection, the first WUS is received by all or part of apparatuses for WUS detection in the target apparatus group for WUS detection.

In a possible design of this embodiment, wake-up of the apparatus for WUS detection is indicated by ID information or group ID information, or wake-up of the apparatus for WUS detection is indicated by mapping different ID information or group ID information into a bitmap.

In a possible design of this embodiment, the transmitting module 1210 is further configured to transmit a measurement signal. The measurement signal is used by an apparatus for WUS detection to detect at least one of the first WUS or the second WUS based on a measurement result of the measurement signal.

In a possible design of this embodiment, the measurement signal includes a first measurement signal and a second measurement signal. The first measurement signal is associated with the first WUS, and the second measurement signal is associated with the second WUS.

In a possible design of this embodiment, the transmitting module 1210 is further configured to configure a detection period. The detection period is used by an apparatus for WUS detection to detect at least one of the first WUS or the second WUS.

In a possible design of this embodiment, the detection period includes a first period and a second period. The first period is associated with the first WUS, and the second period is associated with the second WUS.

In a possible design of this embodiment, the first period is greater than the second period. The first period includes a first time period, where the first time period is used by the apparatus for WUS detection to detect the first WUS. The second period includes a second time period, where the second time period is used by the apparatus for WUS detection to detect the second WUS.

In a possible design of this embodiment, the first period is less than the second period. The first period includes a first time period, where the first time period is used by the apparatus for WUS detection to detect the first WUS. The second period includes a second time period, where the second time period is used by the apparatus for WUS detection to detect the second WUS.

In a possible design of this embodiment, the transmitting module 1210 is configured to transmit the first WUS and the second WUS, when there is downlink data or a paging instruction to be transmitted.

In a possible design of this embodiment, the transmitting module 1210 is further configured to transmit an indication signalling. The indication signalling indicates an apparatus for WUS detection to detect at least one of the first WUS or the second WUS.

In a possible design of this embodiment, the indication signalling includes at least one of a first indication signalling, a second indication signalling, or a third indication signalling. The first indication signalling indicates the apparatus for WUS detection to detect the first WUS. The second indication signalling indicates the apparatus for WUS detection to detect the second WUS. The third indication signalling indicates the apparatus for WUS detection to detect the first WUS and the second WUS.

In a possible design of this embodiment, a receiving module 1120 is configured to receive a measurement result of a measurement signal. The measurement result of the measurement signal is a signal quality obtained by the apparatus for WUS detection through measurement on the measurement signal.

In a possible design of this embodiment, the transmitting module 1210 is configured to transmit the indication signalling based on a measurement result of a first measurement signal; or transmit the indication signalling based on a measurement result of a second measurement signal; or transmit the indication signalling based on the measurement result of the first measurement signal and the measurement result of the second measurement signal. The first measurement signal is associated with the first WUS, and the second measurement signal is associated with the second WUS.

In a possible design of this embodiment, the measurement result includes a signal quality, and the signal quality is determined based on an SINR or a signal strength. The SINR refers to a ratio of a signal to noise, typically with a unit of dB. When the SINR has a larger value, it indicates less noise and better signal quality. When the SINR has a smaller value, it indicates more noise and poorer signal quality. The signal strength refers to a strength or power level of a received signal, typically with a unit of dBm. When the signal strength has a larger value, it indicates a high signal strength. When the signal strength has a smaller value, it indicates a low signal strength.

In a possible design of this embodiment, a waveform of the first measurement signal is similar to the waveform 610 in FIG. 6, and a signal sequence used for the first measurement signal includes at least one of a CAZAC sequence, a PN sequence, a Gold sequence, an M sequence, or a Hadamard sequence.

In a possible design of this embodiment, the second measurement signal includes at least one of: an SSB, a CSI-RS, a TRS, or a PT-RS.

In a possible design of this embodiment, the transmitting module 1210 is configured to transmit a first indication signalling, when a signal quality of the first measurement signal is greater than a first threshold, where the first indication signalling indicates the apparatus for WUS detection to detect the first WUS. The transmitting module 1210 is further configured to transmit a second indication signalling, when the signal quality of the first measurement signal is less than the first threshold, where the second indication signalling indicates the apparatus for WUS detection to detect the second WUS.

In a possible design of this embodiment, the transmitting module 1210 is configured to transmit a second indication signalling, when a signal quality of the second measurement signal is greater than a second threshold, where the second indication signalling indicates the apparatus for WUS detection to detect the second WUS. The transmitting module 1210 is further configured to transmit a first indication signalling, when the signal quality of the second measurement signal is less than the second threshold, where the first indication signalling indicates the apparatus for WUS detection to detect the first WUS.

In a possible design of this embodiment, the transmitting module 1210 is configured to transmit a third indication signalling, when a signal quality of the first measurement signal is greater than a first threshold and a signal quality of the second measurement signal is greater than a second threshold, where the third indication signalling indicates the apparatus for WUS detection to detect the first WUS and the second WUS. The transmitting module 1210 is further configured to transmit a first indication signalling, when the signal quality of the first measurement signal is greater than the first threshold and the signal quality of the second measurement signal is less than the second threshold, where the first indication signalling indicates the apparatus for WUS detection to detect the first WUS. The transmitting module 1210 is further configured to transmit a second indication signalling, when the signal quality of the first measurement signal is less than the first threshold and the signal quality of the second measurement signal is greater than the second threshold, where the second indication signalling indicates the apparatus for WUS detection to detect the second WUS. The transmitting module 1210 is further configured to transmit a fourth indication signalling, when the signal quality of the first measurement signal is less than the first threshold and the signal quality of the second measurement signal is less than the second threshold, where the fourth indication signalling indicates the apparatus for WUS detection to initiate detection of a control channel.

In a possible design of this embodiment, the first WUS is transmitted when there is downlink data or a paging instruction to be transmitted.

In a possible design of this embodiment, the second WUS is transmitted when there is downlink data or a paging instruction to be transmitted.

In a possible design of this embodiment, the first WUS and the second WUS are transmitted when there is downlink data or a paging instruction to be transmitted.

In this embodiment, the transmitting module 1210 may be split into at least one transmitting sub-module. Each transmitting sub-module, for example, a first transmitting sub-module, a second transmitting sub-module, a third transmitting sub-module, and a fourth transmitting sub-module, is configured to perform at least one of the above transmission operations. The first transmitting sub-module is configured to transmit at least one of the first WUS or the second WUS, the second transmitting sub-module is configured to transmit the measurement signal, the third transmitting sub-module is configured to configure the detection period, and the fourth transmitting sub-module is configured to transmit the indication signalling. Alternatively, the first transmitting sub-module is configured to transmit the measurement signal, the second transmitting sub-module is configured to configure the detection period, the third transmitting sub-module is configured to transmit the indication signalling, and the fourth transmitting sub-module is configured to transmit at least one of the first WUS or the second WUS. Alternatively, the first transmitting sub-module is configured to configure the detection period, the second transmitting sub-module is configured to transmit the indication signalling, the third transmitting sub-module is configured to transmit at least one of the first WUS or the second WUS, and the fourth transmitting sub-module is configured to transmit the measurement signal. Functions of different transmitting sub-modules are not limited in this embodiment.

In this embodiment, one transmitting module 1210 is taken as an example for illustration, and the number of transmitting modules 1210 is not limited.

For an introduction to functions of the transmitting module 1210, reference can be made to the contents of operations at 910 in the embodiment of FIG. 9.

For an introduction to functions of the receiving module 1220, reference can be made to the contents of operations at 910 in the embodiment of FIG. 9.

FIG. 13 is a schematic structural diagram of a terminal device or a network device 1300 provided in an exemplary embodiment of the disclosure. The terminal device or the network device 1300 includes a processor 1301, a receiver 1302, a transmitter 1303, a memory 1304, and a bus 1305.

The processor 1301 includes one or more processing cores, and the processor 1301 executes various function applications and information processing by running software programs and modules. In some embodiments, the processor 1301 may be configured to implement the functions and operations of the detecting module 1110 described above.

The receiver 1302 and the transmitter 1303 may be implemented as a transceiver assembly, and the transceiver assembly may be a communication chip. The transceiver assembly may be referred to as a transceiver. In some embodiments, the receiver 1302 may be configured to implement the functions and operations of the receiving module 1220 described above. In some embodiments, the transmitter 1303 may be configured to implement the functions and operations of the transmitting modules 1120 and 1210 described above.

The memory 1304 is connected to the processor 1301 via the bus 1305.

The memory 1304 may be configured to store at least one instruction. The processor 1301 is configured to execute the at least one instruction to implement various operations in the above method embodiments.

In addition, the memory 1304 may be implemented by any type of volatile storage device or non-volatile storage device or a combination thereof. The volatile storage device or non-volatile storage device includes, but is not limited to, a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, the receiver 1302 may receive signals/data independently, or the processor 1301 may control the receiver 1302 to receive signals/data, or the processor 1301 may request the receiver 1302 to receive signals/data, or the processor 1301 may cooperate with the receiver 1302 to receive signals/data.

In some embodiments, the transmitter 1303 may transmit signals/data independently, or the processor 1301 may control the transmitter 1303 to transmit signals/data, or the processor 1301 may request the transmitter 1303 to transmit signals/data, or the processor 1301 may cooperate with the transmitter 1303 to transmit signals/data.

In an exemplary embodiment, a computer-readable storage medium is further provided. The computer-readable storage medium stores at least one program which is configured to be loaded and executed by a processor to implement the method for WUS detection or the method for WUS transmission provided in the above method embodiments.

In an exemplary embodiment, a chip is further provided. The chip includes programmable logic circuits and/or program instructions. The chip is configured to, when running on a terminal device or a network device, implement the method for WUS detection or the method for WUS transmission provided in the above method embodiments.

In an exemplary embodiment, a computer program product or a computer program is further provided. The computer program product or the computer program includes computer instructions which are stored in a computer-readable storage medium. A processor obtains the computer instructions from the computer-readable storage medium and executes the computer instructions to implement the method for WUS detection or the method for WUS transmission provided in the above method embodiments.

It will be understood by those of ordinary skill in the art that, all or part of the operations in the above embodiments may be accomplished by means of hardware, or a program to instruct associated hardware. The program may be stored in a computer-readable storage medium. The storage medium may be an ROM, a magnetic disk, or an optical disk, etc.

The foregoing elaborations are merely optional embodiments of the disclosure, and are not intended for limiting the disclosure. Any modification, equivalent replacement, and improvement made within the concept and principle of the disclosure shall fall within the protection scope of the disclosure.

## Claims

1. A method for wake-up signal (WUS) detection, performed by a terminal device and comprising:
detecting at least one of a first WUS or a second WUS;
wherein detection energy consumption for the first WUS is lower than detection energy consumption for the second WUS.

2. The method of claim 1, wherein detecting at least one of the first WUS or the second WUS comprises at least one of:
detecting at least one of the first WUS or the second WUS based on a measurement result of a measurement signal;
detecting at least one of the first WUS or the second WUS based on a detection period configured; or
detecting at least one of the first WUS or the second WUS based on an indication signalling transmitted by a network device.

3. The method of claim 2, wherein detecting at least one of the first WUS or the second WUS based on the measurement result of the measurement signal comprises:
detecting at least one of the first WUS or the second WUS based on a measurement result of a first measurement signal; or
detecting at least one of the first WUS or the second WUS based on a measurement result of a second measurement signal; or
detecting at least one of the first WUS or the second WUS based on the measurement result of the first measurement signal and the measurement result of the second measurement signal;
wherein the first measurement signal is associated with the first WUS, and the second measurement signal is associated with the second WUS.

4. The method of claim 3, wherein detecting at least one of the first WUS or the second WUS based on the measurement result of the first measurement signal comprises:
detecting the first WUS, when a signal quality of the first measurement signal is greater than a first threshold; and
detecting the second WUS, when the signal quality of the first measurement signal is less than the first threshold.

5. The method of claim 3, wherein detecting at least one of the first WUS or the second WUS based on the measurement result of the second measurement signal comprises:
detecting the second WUS, when a signal quality of the second measurement signal is greater than a second threshold; and
detecting the first WUS, when the signal quality of the second measurement signal is less than the second threshold.

6. The method of claim 3, wherein detecting at least one of the first WUS or the second WUS based on the measurement result of the first measurement signal and the measurement result of the second measurement signal comprises at least one of:
detecting the first WUS and the second WUS, when a signal quality of the first measurement signal is greater than a first threshold and a signal quality of the second measurement signal is greater than a second threshold;
detecting the first WUS, when the signal quality of the first measurement signal is greater than the first threshold and the signal quality of the second measurement signal is less than the second threshold; or
detecting the second WUS, when the signal quality of the first measurement signal is less than the first threshold and the signal quality of the second measurement signal is greater than the second threshold.

7. The method of claim 6, further comprising:
initiating detection of a control channel, when the signal quality of the first measurement signal is less than the first threshold and the signal quality of the second measurement signal is less than the second threshold;
wherein the detection of the control channel comprises at least one of discontinuous reception (DRX) detection or paging detection.

8. The method of any one of claims 2 to 7, wherein the detection period comprises a first period and a second period; and
detecting at least one of the first WUS or the second WUS based on the detection period configured comprises:
detecting the first WUS based on the first period; and
when the first WUS is detected, detecting the second WUS based on the second period;
wherein the first period is associated with the first WUS, and the second period is associated with the second WUS.

9. The method of claim 8, wherein the first period is greater than the second period;
the first period comprises a first time period, wherein the first time period is used for detecting the first WUS; and
the second period comprises a second time period, wherein the second time period is used for detecting the second WUS.

10. The method of claim 9, wherein when the first WUS is detected, detecting the second WUS based on the second period comprises:
detecting the second WUS in a third time period within an (*i*+1)-th first period, when the first WUS is detected within an *i*-th first period;
wherein the third time period is an intersection of the first time period and the second time period, and *i* is a positive integer.

11. The method of any one of claims 2 to 7, wherein the detection period comprises a first period and a second period; and
detecting at least one of the first WUS or the second WUS based on the detection period configured comprises:
detecting the second WUS based on the second period; and
when the second WUS is detected, detecting the first WUS based on the first period;
wherein the first period is associated with the first WUS, and the second period is associated with the second WUS.

12. The method of claim 11, wherein the first period is less than the second period;
the first period comprises a first time period, wherein the first time period is used for detecting the first WUS; and
the second period comprises a second time period, wherein the second time period is used for detecting the second WUS.

13. The method of claim 12, wherein when the second WUS is detected, detecting the first WUS based on the first period comprises:
detecting the first WUS in a third time period within an (*i*+1)-th second period, when the second WUS is detected within an *i*-th second period;
wherein the third time period is an intersection of the first time period and the second time period, and *i* is a positive integer.

14. The method of any one of claims 2 to 13, wherein detecting at least one of the first WUS or the second WUS based on the indication signalling transmitted by the network device comprises:
detecting the first WUS, when the indication signalling indicates detection of the first WUS;
detecting the second WUS, when the indication signalling indicates detection of the second WUS; and
detecting the first WUS and the second WUS, when the indication signalling indicates detection of the first WUS and the second WUS.

15. The method of any one of claims 2 to 13, wherein before detecting at least one of the first WUS or the second WUS based on the indication signalling transmitted by the network device, the method further comprises:
transmitting a measurement result of a first measurement signal and/or a measurement result of a second measurement signal, wherein the measurement result is used for assisting the network device in transmitting the indication signalling.

16. The method of any one of claims 1 to 15, wherein the first WUS is a signal having a first waveform, and the second WUS is a signal having a second waveform;
wherein the first waveform is obtained based on a single-carrier modulation scheme, and the second waveform is obtained based on a multi-carrier modulation scheme.

17. The method of claim 16, wherein
the first waveform comprises at least one of an on-off keying (OOK) waveform, a binary phase shift keying (BSK) waveform, an amplitude shift keying (ASK) waveform, or a frequency shift keying (FSK) waveform; and
the second waveform comprises an orthogonal frequency division multiplexing (OFDM) waveform.

18. A method for wake-up signal (WUS) transmission, performed by a network device and comprising:
transmitting at least one of a first WUS or a second WUS;
wherein detection energy consumption for the first WUS is lower than detection energy consumption for the second WUS.

19. The method of claim 18, further comprising:
transmitting a measurement signal, wherein the measurement signal is used by a terminal device to detect at least one of the first WUS or the second WUS based on a measurement result of the measurement signal.

20. The method of claim 19, wherein the measurement signal comprises a first measurement signal and a second measurement signal;
wherein the first measurement signal is associated with the first WUS, and the second measurement signal is associated with the second WUS.

21. The method of claim 18, further comprising:
configuring a detection period, wherein the detection period is used by a terminal device to detect at least one of the first WUS or the second WUS.

22. The method of claim 21, wherein the detection period comprises a first period and a second period;
wherein the first period is associated with the first WUS, and the second period is associated with the second WUS.

23. The method of claim 22, wherein the first period is greater than the second period;
the first period comprises a first time period, wherein the first time period is used by the terminal device to detect the first WUS; and
the second period comprises a second time period, wherein the second time period is used by the terminal device to detect the second WUS.

24. The method of claim 22, wherein the first period is less than the second period;
the first period comprises a first time period, wherein the first time period is used by the terminal device to detect the first WUS; and
the second period comprises a second time period, wherein the second time period is used by the terminal device to detect the second WUS.

25. The method of any one of claims 18 to 24, wherein transmitting at least one of the first WUS or the second WUS comprises:
transmitting the first WUS and the second WUS, when there is downlink data or a paging instruction to be transmitted.

26. The method of claim 18, further comprising:
transmitting an indication signalling, wherein the indication signalling indicates a terminal device to detect at least one of the first WUS or the second WUS.

27. The method of claim 26, wherein the indication signalling comprises at least one of a first indication signalling, a second indication signalling, or a third indication signalling;
wherein the first indication signalling indicates the terminal device to detect the first WUS;
the second indication signalling indicates the terminal device to detect the second WUS; and
the third indication signalling indicates the terminal device to detect the first WUS and the second WUS.

28. The method of claim 26 or 27, wherein before transmitting the indication signalling, the method further comprises:
receiving a measurement result of a measurement signal, wherein the measurement result of the measurement signal is a signal quality obtained by the terminal device through measurement on the measurement signal.

29. The method of claim 28, wherein transmitting the indication signalling comprises:
transmitting the indication signalling based on the measurement result of the measurement signal.

30. The method of claim 29, wherein transmitting the indication signalling based on the measurement result of the measurement signal comprises:
transmitting the indication signalling based on a measurement result of a first measurement signal; or
transmitting the indication signalling based on a measurement result of a second measurement signal; or
transmitting the indication signalling based on the measurement result of the first measurement signal and the measurement result of the second measurement signal;
wherein the first measurement signal is associated with the first WUS, and the second measurement signal is associated with the second WUS.

31. The method of claim 30, wherein transmitting the indication signalling based on the measurement result of the first measurement signal comprises:
transmitting a first indication signalling, when a signal quality of the first measurement signal is greater than a first threshold, wherein the first indication signalling indicates the terminal device to detect the first WUS; and
transmitting a second indication signalling, when the signal quality of the first measurement signal is less than the first threshold, wherein the second indication signalling indicates the terminal device to detect the second WUS.

32. The method of claim 30, wherein transmitting the indication signalling based on the measurement result of the second measurement signal comprises:
transmitting a second indication signalling, when a signal quality of the second measurement signal is greater than a second threshold, wherein the second indication signalling indicates the terminal device to detect the second WUS; and
transmitting a first indication signalling, when the signal quality of the second measurement signal is less than the second threshold, wherein the first indication signalling indicates the terminal device to detect the first WUS.

33. The method of claim 30, wherein transmitting the indication signalling based on the measurement result of the first measurement signal and the measurement result of the second measurement signal comprises:
transmitting a third indication signalling, when a signal quality of the first measurement signal is greater than a first threshold and a signal quality of the second measurement signal is greater than a second threshold, wherein the third indication signalling indicates the terminal device to detect the first WUS and the second WUS;
transmitting a first indication signalling, when the signal quality of the first measurement signal is greater than the first threshold and the signal quality of the second measurement signal is less than the second threshold, wherein the first indication signalling indicates the terminal device to detect the first WUS;
transmitting a second indication signalling, when the signal quality of the first measurement signal is less than the first threshold and the signal quality of the second measurement signal is greater than the second threshold, wherein the second indication signalling indicates the terminal device to detect the second WUS; and
transmitting a fourth indication signalling, when the signal quality of the first measurement signal is less than the first threshold and the signal quality of the second measurement signal is less than the second threshold, wherein the fourth indication signalling indicates the terminal device to initiate detection of a control channel;
wherein the detection of the control channel comprises at least one of discontinuous reception (DRX) detection or paging detection.

34. The method of any one of claims 31 to 33, wherein the first WUS is transmitted when there is downlink data or a paging instruction to be transmitted.

35. The method of any one of claims 31 to 33, wherein the second WUS is transmitted when there is downlink data or a paging instruction to be transmitted.

36. The method of any one of claims 31 to 33, wherein the first WUS and the second WUS are transmitted when there is downlink data or a paging instruction to be transmitted.

37. The method of any one of claims 18 to 36, wherein the first WUS is a signal having a first waveform, and the second WUS is a signal having a second waveform;
wherein the first waveform is obtained based on a single-carrier modulation scheme, and the second waveform is obtained based on a multi-carrier modulation scheme.

38. The method of claim 37, wherein
the first waveform comprises at least one of an on-off keying (OOK) waveform, a binary phase shift keying (BSK) waveform, an amplitude shift keying (ASK) waveform, or a frequency shift keying (FSK) waveform; and
the second waveform comprises an orthogonal frequency division multiplexing (OFDM) waveform.

39. An apparatus for wake-up signal (WUS) detection, comprising:
a detecting module configured to detect at least one of a first WUS or a second WUS;
wherein detection energy consumption for the first WUS is lower than detection energy consumption for the second WUS.

40. An apparatus for wake-up signal (WUS) transmission, comprising:
a transmitting module configured to transmit at least one of a first WUS or a second WUS;
wherein detection energy consumption for the first WUS is lower than detection energy consumption for the second WUS.

41. A terminal device, comprising:
a processor;
a transceiver coupled with the processor; and
a memory configured to store executable instructions of the processor;
wherein the processor is configured to load and execute the executable instructions to implement the method for wake-up signal (WUS) detection of any one of claims 1 to 17.

42. A network device, comprising:
a processor;
a transceiver coupled with the processor; and
a memory configured to store executable instructions of the processor;
wherein the processor is configured to load and execute the executable instructions to implement the method for wake-up signal (WUS) transmission of any one of claims 18 to 38.

43. A computer-readable storage medium storing at least one program which is configured to be loaded and executed by a processor to implement the method for wake-up signal (WUS) detection of any one of claims 1 to 17 or the method for WUS transmission of any one of claims 18 to 38.

44. A chip comprising programmable logic circuits and/or program instructions, wherein when running on a terminal device or a network device, the chip is configured to implement the method for wake-up signal (WUS) detection of any one of claims 1 to 17 or the method for WUS transmission of any one of claims 18 to 38.

45. A computer program product comprising computer instructions which are stored in a computer-readable storage medium, wherein the computer instructions are configured to be obtained by a processor from the computer-readable storage medium and executed by the processor to implement the method for wake-up signal (WUS) detection of any one of claims 1 to 17 or the method for WUS transmission of any one of claims 18 to 38.
